# EUROPÄISCHE PATENTSCHRIFT

(11) **EP 1 159 548 B1**
(45) Veröffentlichungstag und Bekanntmachung des Hinweises auf die Patenterteilung: **28.05.2003**
(21) Anmeldenummer: 00910708.7
(22) Anmeldetag: 25.02.2000
(51) Int. Cl.: F16D 57/04

(54) **HYDRODYNAMISCHER RETARDER MIT AXIAL VERSCHIEBBAREM ROTOR UND RÜCKSTELLEINRICHTUNG**
HYDRODYNAMIC RETARDER WITH AXIALLY SLIDING ROTOR AND RESTORING MECHANISM
RALENTISSEUR HYDRODYNAMIQUE A ROTOR A DEPLACEMENT AXIAL ET DISPOSITIF DE RAPPEL

(30) Priorität: 03.03.1999 DE 29903829 U
(43) Veröffentlichungstag der Anmeldung: 05.12.2001
(73) Patentinhaber: Voith Turbo GmbH & Co. KG, 89522 Heidenheim (DE)
(72) Erfinder: VOGELSANG, Klaus, D-74564 Crailsheim (DE)
(74) Vertreter: Dr. Weitzel & Partner
(86) Internationale Anmeldenummer: EP0001543
(87) Internationale Veröffentlichungsnummer: WO00052352

(56) Entgegenhaltungen:
- WO-A-98/35170
- DE-A- 19 646 597

## Beschreibung

Die Erfindung betrifft einen hydrodynamischen Retarder gemäß dem Oberbegriff von Anspruch 1.

Hydrodynamische Retarder sind beispielsweise aus VDI Handbuch Getriebetechnik II, VDI-Richtlinien VDI 2153, Hydrodynamische Leistungsübertragung Begriffe - Bauformen - Wirkungsweisen, Kapitel 7, Bremsen oder Dubbel, Taschenbuch für den Maschinenbau, 18. Auflage, Seiten R49 bis R53 bekannt, deren Offenbarungsgehalt vollumfänglich in die Anmeldung mit einbezogen. Derartige Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. Auch bei ausgeschaltetem Retarder ist noch ein Restmoment vorhanden, beispielsweise aufgrund einer umlaufenden Restölmenge. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Vermeidung der Ventilationsverluste sind bereits eine Reihe von Lösungen bekannt. Dazu gehören u.a. die Verwendung von Statorbolzen sowie die Möglichkeit einer Kreislaufevakuierung. Diese Lösungen sind jedoch sehr aufwendig in ihrer Umsetzung und bedingen einen erhöhten Platzbedarf und damit größere Retarderabmessungen. Wesentliche Nachteile bei der Verwendung von Statorbolzen sind darin zu sehen, daß diese aufgrund ihrer Anordnung im Profilgrund des Stators auch im Bremsbetrieb in den Arbeitskreislauf hineinreichen und diesen damit stören. Die Möglichkeit der Verwendung getrennter äußerer Kühl-Kreisläufe, bei der beim Leerlaufbetrieb eine genau bestimmte Ölmenge in einem separaten Kreislauf eingeschlossen wird, ist sehr aufwendig in ihrer Umsetzung, da zusätzliche Bauteile benötigt werden. Des weiteren muß ständig eine sichere Trennung zwischen den einzelnen Zirkulationswegen gewährleistet sein.

Eine weitere Möglichkeit zur Reduzierung der Leerlaufverluste besteht im Verschwenken der Statorschaufelrades gegenüber dem Rotorschaufelrad. Möglichkeiten zur Lageänderung des Statorschaufelrades gegenüber dem Rotorschaufelrad sind bereits aus den folgenden Druckschriften bekannt:
1. DE 31 13 408 C1
2. DE 40 10 970 A1
3. DE 44 20 204 A1
4. DE 15 25 396 A1
5. DE 16 00 148 A1
6. WO 98/35171

Die diesen Ausführungen zugrundeliegende Aufgabe besteht in einer aktiven Anpassung an verschiedene Betriebszustände.
Die DE 31 13 408 C1 offenbart Möglichkeiten einer Statorschaufelradverstellung eines Retarders für den Einsatz in stationären Anlagen, beispielsweise in Windkraftanlagen zur Umsetzung der Windenergie in Wärme. Die Verstellung erfolgt manuell oder mittels entsprechender Hilfsmittel. Die Feststellung des Statorschaufelrades in der ausgeschwenkten Lage erfolgt mittels mechanischer Hilfsmittel, beispielsweise in Form von Schrauben. Die Verstellung erfolgt zum Zweck der Anpassung der Strömungsbremse an die Windkraftanlage. Der Zeitaufwand für die Realisierung einer Verstellung ist entsprechend hoch, und die Ausführung ist demzufolge in keiner Weise für den Einsatz im Fahrzeug geeignet.

Der in der Druckschrift DE 40 10 970 A1 offenbarte Retarder weist analog zu der erstgenannten Druckschrift ein Statorschaufelrad auf, das in seiner Lage veränderbar ist. Jedoch erfolgt hier eine Lageveränderung durch eine zusätzlich zum Bremsmoment erzeugte Reaktionskraft, die dem Bremsmoment proportional ist. Diese Reaktionskraft wird durch eine entsprechende Gestaltung und Lagerung des Schaufelrades erzeugt. Der Reaktionskraft wird eine Verstellkraft, die von einer Verstelleinrichtung aufgebracht wird, entgegengesetzt. Die Größe der Verstellkraft beeinflußt dabei entscheidend die Wirkung der Reaktionskraft und damit das Bremsmoment aufgrund der Bedingung, daß die Summe aller auf ein abgeschlossenes System wirkenden äußeren Momente gleich Null ist. Beide Möglichkeiten dienen zur Einstellung bzw. Steuerung des Bremsmomentes. Sie zeichnen sich durch einen enormen konstruktiven Aufwand sowie eine hohe Bauteilanzahl aus.

Aus der DE 44 20 204 A1 ist ein Retarder mit einem selbsttätigen Schwenkstator bekannt geworden, der aufgrund seiner exzentrischen Lagerung im Leerlaufbetrieb selbsttätig in eine Lage gebracht wird, in der keine oder nur ein geringer Teil an Luftmassen zwischen dem Rotorschaufelrad und dem Statorschaufelrad bewegt wird.

Eine andere Möglichkeit der Minimierung von Leerlaufverlusten besteht gemäß der DE 15 25 396 A1 und der DE 16 00 148 A1 darin, mit Hilfe eines Kupplungssystems die Rotoren im Leerlauf von der Bremswelle zu lösen und im Bremsbetrieb mit der Bremswelle zu kuppeln, um so die Leerlaufleistung möglichst gering zu halten. Nachteilig an diesen Retardern war deren aufwendige Konstruktion.

Die WO 98/35171 zeigt einen Retarder mit sämtlichen Merkmalen des Oberbegriffes von Anspruch 1 mit einem Rotorgehäuse, das einen Rotor umfaßt, einem Statorgehäuse, das einen Stator umfaßt, wobei Rotor- und Statorgehäuse miteinander verbunden sind, derart, daß zwischen Rotor und Stator ein Spalt ausgebildet wird sowie Mittel zum axialen Verschieben des Rotors gegenüber dem Stator von einer Leerlaufposition in eine Arbeitsposition.

Nachteilig an der Vorrichtung gemäß der WO 98/35171 war die große Baulänge, insbesondere aufgrund der notwendigen Rückstelleinrichtung von der Arbeits- in die Leerlaufposition, beispielsweise mit Hilfe von Federn oder Druckmitteln.

Aufgabe der Erfindung ist es somit, einen hydrodynamischen Retarder anzugeben, der sich durch eine sehr kurze axiale Baulänge auszeichnet und minimiale Leerlaufverluste aufweist.

Erfindungsgemäß wird diese Aufgabe durch einen hydrodynamischen Retarder mit den Merkmalen des Anspruches 1 gelöst.

Der erfindungsgemäße Retarder zeichnet sich durch eine sehr kurze axiale Baulänge aus.

Dies hat insbesondere den Vorteil, daß auf eine retarderseitige Lagerung verzichtet werden kann. Für den Retarder wird somit lediglich eine zusätzliche Rotationsdichtung benötigt, die beispielsweise als Kolbenring oder als berührungslose Spaltringdichtung ausgeführt sein kann.

In einer ersten Ausgestaltung der Erfindung ist vorgesehen, daß die Kolbenfläche, auf die die erfindungsgemäße Druckstoßeinrichtung wirkt, direkt am Rotor zwischen dem Rotordichtelement und der laufenden Verzahnung mit der Welle ausgebildet wird.

Vorteilhafterweise sind die Haltemittel zum Halten des Rotors im entleerten Zustand in der Leerlaufposition derart dimensioniert, daß der Rotor in der Leerlaufposition gegenüber allen im Leerlauf, d. h. bei ausgeschaltetem Retarder, auftretenden Kräften in dieser Position gehalten wird und andererseits wiederum so gering, daß bei Befüllung, d. h. bei Einschalten des Retarders, über das Bremsmoment der Rotor wieder in die Arbeitsposition verschoben wird.

In einer ersten Ausgestaltung der Erfindung kann vorgesehen sein, daß als Haltemittel eine Magnetkrafteinrichtung vorgesehen ist. Alternativ hierzu wären auch Reibkrafteinrichtungen oder Konus-Kupplungen möglich.

In einer besonders bevorzugten Ausführungsform der Erfindung sitzt der Rotor auf einer Welle, die kein freies Wellenende darstellt, d. h. durch den Retarder und damit koaxial durch den Rotor wird eine Welle geleitet, so daß beispielsweise das Traktionsmoment eines Getriebes durch den Retarder geleitet werden kann.

In einer besonders kostengünstigen Ausführungsform ist vorgesehen, daß die Mittel zum selbsttätigen Verbringen Mittel zum Umsetzen des Rotordrehmomentes in eine Axialbewegung umfassen.

Für die Umsetzung des Rotordrehmomentes in eine Axialbewegung sind eine Vielzahl von konstruktiven Lösungen denkbar. In einer ersten Ausführungsform kann vorgesehen sein, daß die Mittel zum Umsetzen ein Gewinde mit gleichmäßiger Steigung, beispielsweise ein Steilgewinde umfassen.

In einer alternativen Ausführungsform können die Mittel zum Umsetzen eine Kulissenführung umfassen.

Besonders bevorzugt ist es, wenn das Gewinde bzw. die Kulissenführung auf der Rotornabe selbst angeordnet ist.

Alternativ hierzu könnte das Gewinde bzw. die Kulissenführung auch in einem mitdrehenden Rotorgehäuse ausgebildet sein.

Neben der Ausführung der Mittel zum Umsetzen des Drehmomentes in eine Axialkraft in Form eines Gewindes sind andere konstruktive Ausgestaltungen denkbar, wie beispielsweise ein Zugmittel, eine Hebelvorrichtung, etc.

Die Erfindung soll nachfolgend anhand der Zeichnung beispielhaft beschrieben werden.

Es zeigen:

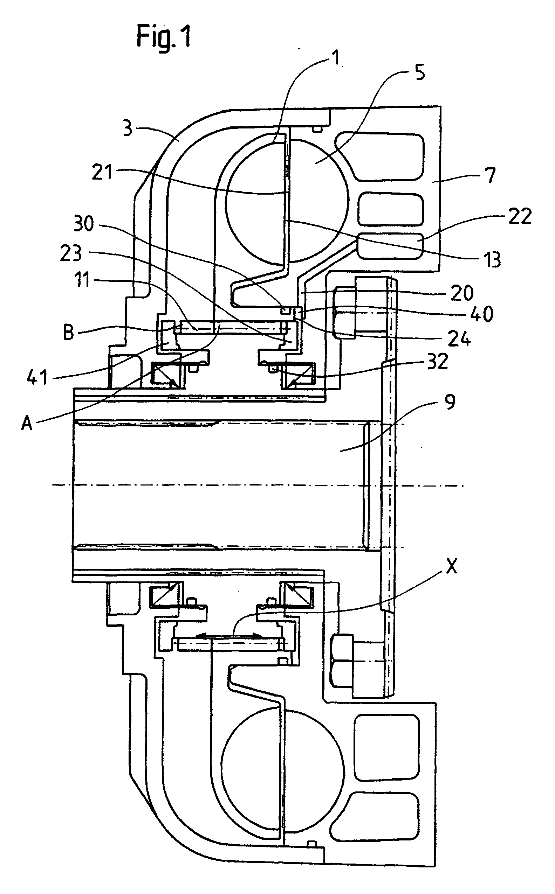

Fig. 1 einen erfindungsgemäßen Retarder.

Der Retarder umfaßt einen Rotor 1, der in einem Rotorgehäuse 3 untergebracht ist, sowie einen Stator 5, der in einem Statorgehäuse 7 angeordnet ist. Der Rotor 1 ist auf einer Welle 9 über Verstellverzahnung 11, die beispielsweise ein nicht gezeigtes Steilgewinde aufweisen kann, drehbar gelagert und kann aus der dargestellten Arbeitsposition A, in der der Spalt 13 zwischen Rotor und Stator minimal ist, in die Position B durch axiale Verschiebung entlang des Weges X verbracht werden. In der Leerlaufposition B ist der Spalt zwischen Rotor und Stator im Rahmen der baulichen Ausgestaltung maximal und die Leerlaufverluste sind, wie beispielsweise in der WO 98/35171 beschrieben, deren Offenbarungsgehalt in die vorliegende Anmeldung vollumfänglich mit aufgenommen wird, aufgrund des großen Abstandes von Rotor und Stator minimiert.

Erfindungsgemäß weist der Retarder eine Druckstoßeinrichtung auf, die vorliegend einen Druckkanal 20 ausgehend vom Druckraum 22 umfaßt.

Nachfolgend soll die Funktionsweise der Druckstoßeinrichtung beispielhaft beschrieben werden.

Wird der Retarder ausgeschaltet, d. h. in den Leerlaufbetrieb versetzt, so wird der Retarder zunächst von der Retarderarbeitsflüssigkeit, die zumeist Öl ist, entleert. Im entleerten Zustand wird über Druckkanal bzw. Leitung 20 ein Druckstoß in den vom Retarderarbeitsraum 21 durch Dichtungen 30 und 32 druckmäßig weitgehend getrennten Raum 23 eingeleitet, der auf die Fläche 24 des Rotors 1 wirkt und den Rotor 1 in Richtung Anschlag 41 verschiebt. Die Kolbenwirkfläche 24 des Rotors 1 befindet sich zwischen dem ersten rotierenden Kolbendichtungsring 30 und der zweiten rotierenden Dichtung 32. Der Retarderarbeitsraum 21 wird durch eine dritte Dichtung 31 druckmäßig von der umlaufenden Welle 9 weitgehend getrennt.

Im Gegensatz zum Stand der Technik wird zur Verschiebung des Rotors aus der Arbeitsposition in die Leerfaufposition kein separater Kolben oder eine separate Rückstelleinrichtung benutzt sondern stattdessen ein Teil des Rotors, nämlich die Kolbenwirkfläche 24 des Rotors 1. Dem Verschieben des Rotors aus der Arbeits- in die Leerlaufposition dient beim entleerten Retarder der kurzzeitige Druckstoß, der über Druckkanal 20 eingeleitet wird. Eine derartige Anordnung bietet, wie eingangs erwähnt, den ganz entscheidenden Vorteil einer kurzen Bauweise in axialer Richtung.

Ein weiterer Vorteil der vorgestellten Anordnung besteht darin, daß zum Einschalten des Rotors 1 in die Arbeitsposition A aus der Leerlaufposition B kein Druckstoß benötigt wird, sondern dies vielmehr über den normalen Füllvorgang der Retarder-Schaufelteile zu erreichen ist. Eine derartige Verschiebung geschieht dadurch, daß die eingeleitete Arbeitsflüssigkeit auf den Rotor 1 ein Bremsmoment ausübt und den Rotor 1 mit der daraus resultierenden Kraft entlang der Verstellverzahnung 11 in die Arbeitsposition verschiebt und gegen den Anschlag 40 festhält.

Wird der Retarder ausgeschaltet, wobei der Rotor erfindungsgemäß mittels eines Druckstoßes in die Leerlaufposition B gegen den Anschlag 41 verbracht wird, so muß dieser dort während des Leerlaufes gehalten werden. Dies geschieht mit Hilfe einer Haltekraft, die von nicht dargestellten Haltekrafteinrichtungen aufgebracht werden. Denkbar sind beispielsweise Magnetkrafteinrichtungen, Reibkrafteinrichtungen oder Konus-Kupplungen. Eine weitere Möglichkeit des Haltens des Rotors in der Leerlaufposition besteht in der Ausnutzung der inneren Reibung der Verstellverzahnung.

Vorteilhafterweise sind die Haltekräfte der Haltekrafteinrichtungen immer so bemessen, daß einerseits der Rotor in der Leerlaufposition B gegenüber allen im Leerlauf, d. h. bei ausgeschaltetem Retarder, auftretenden Kräften gehalten werden kann, andererseits sind die Haltekräfte so gering gewählt, daß die Axialkräfte auf den Rotor beim Befüllen des Retarders diese übersteigen und somit über das Bremsmoment der Rotor mit Hilfe der Mittel zum Umsetzen der Rotations- in eine Axialbewegung wieder zügig in die Arbeitsposition A selbsttätig verbracht werden kann.

In der in Fig. 1 dargestellten Ausführungsform ist die Welle 9 als durch den Retarder hindurchtretende Welle ausgestaltet, d. h. der Rotor 1 sitzt über die Verzahnung 11 auf einer Welle, die kein freies Wellenende umfaßt.

Eine derartige Ausgestaltung des Retarders ermöglicht es vorteilhafterweise beispielsweise ein Traktionsmoment eines Getriebes durch den Retarder durchzuleiten.

Obwohl die Erfindung einen Retarder ohne freies Wellenende zeigt, ist die Erfindung hierauf nicht beschränkt. Es sind auch Ausführungsformen ohne freies Wellenende denkbar. Mit der vorliegenden Erfindung wird erstmals ein axial sehr kurz zu bauender Retarder gezeigt, wobei die Konstruktion so ausgebildet werden kann, daß eine retarderseitige Lagerung nicht benötigt wird.

### Bezugszeichenliste

- 1: Rotor
- 3: Rotorgehäuse
- 5: Stator
- 7: Statorgehäuse
- 9: Welle
- 11: Verstellverzahnung
- 13: Spalt
- 20: Druckkanal
- 22: Druckraum
- 23: Raum
- 24: Wirkfläche
- 30: erste rotierende Dichtung
- 31: dritte Dichtung
- 32: zweite rotierende Dichtung
- 40: erster Anschlag
- 41: zweiter Anschlag
- A: Arbeitposition
- B: Leerlaufposition
- x: Verschiebeweg

## Patentansprüche

1. Hydrodynamischer Retarder mit
1.1 einem Rotorgehäuse (3), das einen Rotor (1) umfaßt;
1.2 einem Statorgehäuse (7), das einen Stator (5) umfaßt, wobei:
1.3 Rotor- und Statörgehäuse miteinander verbunden sind, derart, daß zwischen Rotor und Stator ein Spalt (13) ausgebildet wird;
1.4 Mitteln zum axialen Verschieben des Rotors (1) gegenüber dem Stator (3);
1.5 wobei die Mittel zum axialen Verschieben Mittel zum selbsttätigen Verbringen des Rotors aus einer ersten Position in eine zweite Position umfassen, wobei
1.6 die erste Position des Rotors (1) eine Leerlaufposition (B) und die zweite Position des Rotors (1) eine Arbeitsposition (A) des Retarders darstellt;
1.7 einer Rückstelleinrichtung zur Rückstellung des Rotors aus der Arbeitsposition in die Leerlaufposition;
1.8 einer Halteeinrichtung zum Halten des Rotors im Leerlauf in der Leerlaufposition, **dadurch gekennzeichnet, daß**
1.9 die Rückstelleinrichtung eine Druckstoßeinrichtung (20, 22) umfaßt und
1.10 der Rotor (1) derart ausgebildet ist, daß er eine Kolbenfläche (24) umfaßt, auf die die Druckstoßeinrichtung wirkt,
1.11 die Druckstoßeinrichtung einen Druckkanal (20) und einen Druckraum (22) umfasst in den zum Verschieben des Rotors aus der Arbeitsposition (A) in die Leerlaufposition (B) ein Druckstoß eingebracht wird und der Retarder des weiteren derart ausgestaltet ist, daß der Rotor (1) aus der Leerlaufposition (B) in die Arbeitsposition (A) ohne Druckstoß über den normalen Füllvorgang verbracht wird.

2. Hydrodynamischer Retarder gemäß Anspruch 1, **dadurch gekennzeichnet, daß** die Kolbenfläche (24) am Rotor zwischen einem ersten Dichtelement (30) und einer laufenden Verzahnung (11) mit der Welle (9) für den Rotor ausgebildet wird.

3. Hydrodynamischer Retarder gemäß einem der Ansprüche 1 bis 2, **dadurch gekennzeichnet, daß** die Halteeinrichtung derart ausgebildet sind, daß ihre Haltekräfte den Retarder im entleerten Zustand in der Leerlaufposition (B) halten und bei Füllung des Retarders die auf den Rotor ausgeübte Kraft die Haltekraft der Halteeinrichtung übersteigt, so daß der Rotor in die Arbeitsposition (A) verbracht wird.

4. Hydrodynamischer Retarder gemäß einem der Ansprüche 1 bis 3, **dadurch gekennzeichnet, daß** die Halteeinrichtung eine Magnetkrafteinrichtung, eine Reibkrafteinrichtung oder eine Konus-Kupplung umfassen.

5. Hydrodynamischer Retarder gemäß einem der Ansprüche 1 bis 4, **dadurch gekennzeichnet, daß** der Rotor (1) auf einer Welle (9) sitzt, die kein freies Wellenende aufweist und durch den Retarder hindurchgeführt wird.

6. Hydrodynamischer Retarder gemäß Anspruch 5, **dadurch gekennzeichnet, daß** die Welle (9) derart ausgebildet ist, daß das Traktionsmoment eines Getriebes durchgeieitet werden kann.

7. Hydrodynamischer Retarder nach einem der Ansprüche 1 bis 6, **dadurch gekennzeichnet, daß** die Mittel zum selbsttätigen Verbringen Mittel zum Umsetzen des Rotordrehmomentes in eine Axialbewegung umfassen.

8. Hydrodynamischer Retarder nach Anspruch 7, **dadurch gekennzeichnet, daß** die Mittel zum Umsetzen des Rotordrehmomentes ein Gewinde mit gleichmäßiger Gewindesteigung umfassen.

9. Hydrodynamischer Retarder nach Anspruch 7, **dadurch gekennzeichnet, daß** die Mittel zum Umsetzen des Rotordrehmomentes eine Kulissenführung mit gleichmäßiger oder ungleichmäßiger Steigung umfassen.

10. Hydrodynamischer Retarder nach einem der Ansprüche 8 oder 9, **dadurch gekennzeichnet, daß** das Gewinde oder die Kulissenführung auf der Rotomabe angeordnet ist.

11. Hydrodynamischer Retarder nach einem der Ansprüche 8 oder 9, **dadurch gekennzeichnet, daß** das Gewinde oder die Kulissenführung in einem mitdrehenden Rotorgehäuse ausgebildet ist.

12. Hydrodynamischer Retarder nach einem der Ansprüche 8 oder 9, **dadurch gekennzeichnet, daß** das Gewinde als Rollgewinde ausgebildet ist.

13. Hydrodynamischer Retarder nach Anspruch 7, **dadurch gekennzeichnet, daß** die Mittel zum Umsetzen des Rotordrehmomentes ein Zugmittel zum Umlenken der Umfangsbewegung des Rotors in eine Axialbewegung umfassen.

14. Hydrodynamischer Retarder nach Anspruch 7, **dadurch gekennzeichnet, daß** die Mittel zum Umsetzen des Rotordrehmomentes Gelenkhebel zum Umlenken der Umfangsbewegung des Rotors in eine Axialbewegung umfassen.

## Claims

1. A hydrodynamic retarder,
1.1 with a rotor housing (3) comprising a rotor (1);
1.2 with a stator housing (7) comprising a stator (5),
1.3 with the rotor and stator housing being mutually connected, such that a gap (13) is formed between the rotor and the stator;
1.4 with means for the axial displacement of the rotor (1) relative to the stator (3);
1.5 with the means for the axial displacement comprising means for the automatic displacement of the rotor from a first position to a second position;
1.6 with the first position of the rotor (1) representing an idle position (B) and the second position of the rotor (1) representing a working position (A) of the retarder;
1.7 with a resetting device for resetting the rotor from the working position to the idle position;
1.8 with a holding device for holding the rotor in idle running in the idle position, **characterized in that**
1.9 the resetting device comprises a pressure surge device (20, 22) and
1.10 the rotor (1) is arranged in such a way that it comprises a piston surface (24) upon which the pressure surge device acts;
1.11 the pressure surge device comprises a pressure channel (20) and a pressure chamber (22), into which a pressure surge is introduced for displacing the rotor from the working position (A) to the idle position (B) and the retarded is arranged further in such a way that the rotor (1) is moved from the idle position (B) to the working position (A) without a pressure surge through the normal filling process.

2. A hydrodynamic retarder according to claim 1, **characterized in that** the piston surface (24) on the rotor is formed between a first sealing element (30) and a running toothing (11) with the shaft (9) for the rotor.

3. A hydrodynamic retarder according to one of the claims 1 to 2, **characterized in that** the holding device is arranged in such a way that its holding forces hold the retarder in the emptied state in the idle position (B) and upon filling the retarder the force exerted on the rotor exceeds the holding force of the holding device, so that the rotor is moved to the working position (A).

4. A hydrodynamic retarder according to one of the claims 1 to 3, **characterized in that** the holding device comprises a magnetic force device, a frictional force device or a cone clutch.

5. A hydrodynamic retarder according to one of the claims 1 to 4, **characterized in that** the rotor (1) sits on a shaft (9) which does not comprise any free shaft end and is guided through the rotor.

6. A hydrodynamic retarder according to claim 5, **characterized in that** the shaft (9) is arranged in such a way that the traction moment of a gear can be guided through.

7. A hydrodynamic retarder according to one of the claims 1 to 7, **characterized in that** the means for the automatic displacement comprise means for converting the rotor torque into an axial movement.

8. A hydrodynamic retarder according to claim 7, **characterized in that** the means for converting the rotor torque comprise a thread with an even thread pitch.

9. A hydrodynamic retarder according to claim 7, **characterized in that** the means for converting the rotor torque comprise a link guide with an even or uneven ascent.

10. A hydrodynamic retarder according to one of the claims 8 or 9, **characterized in that** the thread or link guide is arranged on the rotor hub.

11. A hydrodynamic retarder according to one of the claims 8 or 9, **characterized in that** the thread or link guide is arranged in a co-rotating rotor housing.

12. A hydrodynamic retarder according to one of the claims 8 or 9, **characterized in that** the thread is arranged as a rolling thread.

13. A hydrodynamic retarder according to claim 7, **characterized in that** the means for converting the rotor torque comprise traction means for deflecting the circumferential movement of the rotor into an axial movement.

14. A hydrodynamic retarder according to claim 7, **characterized in that** the means for converting the rotor torque comprise articulated levers for deflecting the circumferential movement of the rotor into an axial movement.

## Revendications

1. Retardateur hydrodynamique avec
1.1 un carter de rotor (3) comprenant un rotor (1) ;
1.2 un carter de stator (7) comprenant un stator (5),
1.3 les carters du rotor et du stator étant reliés de manière à ménager une fente (13) entre rotor et stator ;
1.4 des moyens destinés au déplacement axial du rotor (1) par rapport au stator (3) ;
1.5 les moyens destinés au déplacement axial comprenant des moyens destinés à déplacer automatiquement le rotor d'une première position vers une deuxième position,
1.6 la première position du rotor (1) correspondant à une position de marche à vide (B) et la deuxième position du rotor (1) à une position de fonctionnement (A) du retardateur ;
1.7 un dispositif de rappel pour ramener le rotor de sa position de fonctionnement vers sa position de marche à vide;
1.8 un dispositif de retenue pour retenir, en marche à vide, le rotor dans la position de marche à vide ,
**caractérisé en ce que**
1.9 le dispositif de rappel comprend un bélier (20, 22),
1.10 le rotor (1) est réalisé de manière à comprendre une face d'un piston (24) sur laquelle agit le bélier,
1.11 le bélier comprend un canal de pression (20) et un espace de pression (22) dans lequel on provoque un coup de bélier pour déplacer le rotor de sa position de fonctionnement (A) vers sa position de marche à vide (B) et que le retardateur est par ailleurs équipé de telle sorte que le rotor (1) est déplacé de la position de marche à vide (B) vers la position de fonctionnement (A) sans coup de bélier, par le processus normal de remplissage.

2. Retardateur hydrodynamique selon la revendication 1, **caractérisé en ce que** la face de piston (24) sur le rotor est réalisée entre un premier élément d'étanchéité (30) et un engrenage continu (11) avec l'arbre (9) pour le rotor.

3. Retardateur hydrodynamique selon l'une quelconque des revendications 1 à 2, **caractérisé en ce que** le dispositif de retenue est réalisé de telle sorte que ses forces de retenue retiennent le retardateur vidé dans la position de marche à vide (B) et que, lorsque le retardateur est rempli, la force exercée sur le rotor est supérieure à la force de retenue du dispositif de retenue de sorte que le rotor est amené dans la position de fonctionnement (A).

4. Retardateur hydrodynamique selon l'une quelconque des revendications 1 à 3, **caractérisé en ce que** le dispositif de retenue comprend un mécanisme à force magnétique, un mécanisme à force de frottement ou un accouplement conique.

5. Retardateur hydrodynamique selon l'une quelconque des revendications 1 à 4, **caractérisé en ce que** le rotor (1) est placé sur un arbre (9) qui est dépourvu d'extrémité libre et traverse le retardateur.

6. Retardateur hydrodynamique selon la revendication 5, **caractérisé en ce que** l'arbre (9) est réalisé de manière à pouvoir y faire passer un moment de traction d'une transmission.

7. Retardateur hydrodynamique selon l'une quelconque des revendications 1 à 6, **caractérisé en ce que** les moyens destinés au déplacement automatique comprennent des moyens pour convertir le couple du rotor en un mouvement axial.

8. Retardateur hydrodynamique selon la revendication 7, **caractérisé en ce que** les moyens pour convertir le couple du rotor comprennent un filetage à pas constant.

9. Retardateur hydrodynamique selon la revendication 7, **caractérisé en ce que** les moyens pour convertir le couple du rotor comprennent une coulisse de guidage à pente régulière ou irrégulière.

10. Retardateur hydrodynamique selon l'une quelconque des revendications 8 ou 9, **caractérisé en ce que** le filetage ou la coulisse de guidage est disposé sur le moyeu du rotor.

11. Retardateur hydrodynamique selon l'une quelconque des revendications 8 ou 9, **caractérisé en ce que** le filetage ou la coulisse de guidage est réalisé dans un carter de rotor entraîné en rotation.

12. Retardateur hydrodynamique selon l'une quelconque des revendications 8 ou 9, **caractérisé en ce que** le filetage est réalisé sous forme de filetage par roulage.

13. Retardateur hydrodynamique selon la revendication 7, **caractérisé en ce que** les moyens pour convertir le couple du rotor comprennent un moyen de traction pour changer le mouvement circonférentiel du rotor en un mouvement axial.

14. Retardateur hydrodynamique selon la revendication 7, **caractérisé en ce que** les moyens pour convertir le couple du rotor comprennent des leviers articulés pour changer le mouvement circonférentiel du rotor en un mouvement axial.
